# EUROPEAN PATENT SPECIFICATION

(11) **EP 3 781 283 B1**
(45) Date of publication and mention of the grant of the patent: **12.11.2025**
(21) Application number: 19721848.0
(22) Date of filing: 10.04.2019
(51) Int. Cl.: B01D 29/13, B01D 29/15, B01D 29/17

(54) **SUPPORT BODY FOR FILTER ELEMENTS AND FILTER ELEMENT HEREWITH**
STÜTZKÖRPER FÜR FILTERELEMENTE UND FILTERELEMENT DAMIT
CORPS DE SUPPORT POUR DES ÉLÉMENTS FILTRANTS ET ÉLÉMENT FILTRANT ASSOCIÉ

(30) Priority: 18.04.2018 DE 202018102161 U
(43) Date of publication of application: 24.02.2021
(73) Proprietor: Boll & Kirch Filterbau Gesellschaft mit beschränkter Haftung, 50170 Kerpen (DE)
(72) Inventor: RATHSMANN, Jens, 52385 Nideggen (DE); VIETEN, Willi, 41812 Erkelenz (DE); SCHMITZ, Stefan, 50354 Hürth (DE)
(74) Representative: Patentanwälte Buschhoff Hennicke Althaus
(86) International application number: PCT/IB2019/052947
(87) International publication number: WO 2019/202438

(56) References cited:
- CN-U- 206 924 474
- DE-A1- 102016 002 145
- DE-U1- 202006 001 793
- JP-A- 2001 179 010

## Description

The invention relates to a supporting body for filter elements, in particular for filter candles for reversible flow filters, comprising two end pieces and a supporting structure connecting the end pieces one to the other and delimiting a cavity extending axially along a body axis, the said supporting structure having supporting struts which delimit through openings into the cavity, wherein both end pieces are open on the end face and wherein, offset in the axial direction and offset in the peripheral direction, a plurality of through openings are respectively configured around the cavity. The invention also relates to a filter element for filters, in particular for reversible flow filters, for the filtering of fluids, comprising two end bushings, of which at least one is open on the end face, comprising a supporting body formed by means of a plurality of supporting struts and having through openings for passage of a fluid, and comprising a filter material which surrounds the supporting body and is supported against the latter, wherein the supporting body has two end pieces and a supporting structure connecting the end pieces one to another and delimiting a cavity extending axially along a body axis, the said supporting structure having supporting struts which delimit through openings into the cavity, wherein, offset in the axial direction and offset in the peripheral direction, a plurality of through openings are respectively configured around the cavity.

For the filtering of fluids, it has long been known to support the actual filter material, such as, for instance, a fine-meshed filter fabric, by means of a supporting body in order that the filter fabric can maintain its filter function even in the case of a large pressure gradient between dirty side and clean side. This applies, in particular, when the filter material itself does not have high inherent stability. The more flexible, therefore, the filter fabric is, the more important is the supporting of the filter fabric or filter material by means of a suitable supporting body.

DE 20 2006 001 793 U1 of the Applicant discloses a supporting body of the generic type for filter elements, which already enables a good and very largely cylindrical support of a filter material or filter fabric, whilst, at the same time, good flow characteristics of the filter material are ensured. For this purpose, the supporting body has between two end pieces supporting struts which run helically from one end piece to the other end piece, wherein one supporting strut respectively forms a left-handed helix and the other a right-handed helix, which have, distributed over the length of the supporting body, numerous crossover points. Each through opening formed between the supporting struts hereby acquires a quadrangular honeycomb or lozenge shape, wherein the individual through openings are elongated in the longitudinal direction of the supporting body. According to one particular embodiment, longitudinal struts, which run from one end piece to the other end piece and which accordingly reduce the individual through openings to an acute-angled triangular shape, can be provided distributed over the periphery. The supporting body is preferably made in one piece by casting process and can consist of plastic or a suitable metal.

From DE 10 2016 002 145 A1, it is known to provide the supporting body of a filter element with a plurality of diamond-shaped openings; in the case of a plastics supporting body, with the diamond shape an opening profile which has no right angles is created, whereby the formation of notches or cracks on the corners of the webs delimiting the opening is lessened. Due to the diamond shape of the openings, at the same time a high rigidity of the supporting body is said to be ensured. It is preferred that the diamond-shaped through openings have a greater extent in the peripheral direction than in a direction parallel to the longitudinal axis of the supporting body.

CN206924474U discloses a multipart filter element structure having a conical or cylindrical supporting cage with two rings at both ends, being connected by struts running parallel to the body axis of the cage body. The cage body forms the supporting skelett for a second supporting element in the form of an originally flat rectangular sheet comprising several sectors equipped with through holes, being bent around the supporting cage. Between each sector, the second supporting element has strips not being equipped with through-holes, such that in the mounted state, the struts are being arranged at positions of these closed strips. The through-holes in the second element may be honeycomb shaped or may have a different shape. In order to be used as water filter, a woven filter material, preferably a nucleopore fine filter membrane, is mounted on the outer circumference of the second supporting element. The multipart support structure will be equipped with a top cover and a bottom cover to serve as a filter cartridge for filtering water.

The object of the invention is to provide a supporting body which has a high inherent rigidity and, at the same time, enables both good supporting of a filter material and favourable flow characteristics of the filter material.

This object is achieved with the invention in respect of a supporting body, according to claim 1, by virtue of the fact that a majority of the through openings are configured as hexagonal honeycomb openings having supporting struts, running parallel to the body axis, as lateral delimiting struts, and having supporting struts, converging in a V-shape, as end-face delimiting struts, and that on an inner side of the supporting structure are configured at least two stiffening ribs, preferably four stiffening ribs, which extend parallel to the body axis and protrude partially into the cavity enclosed by the supporting structure. At variance with the generic prior art, a large part of the through openings does not acquire a quadrangular diamond shape, but rather a hexagonal honeycomb shape, and, in addition, stiffening ribs, which significantly increase the flexural rigidity of the entire supporting body between the two end pieces. In the filter element according to the invention, a majority of the through openings are correspondingly configured as hexagonal honeycomb openings having supporting struts, running parallel to the body axis, as lateral delimiting struts, and having supporting struts, converging in a V-shape, as end-face delimiting struts, and on an inner side of the supporting structure are configured at least two stiffening ribs, which extend parallel to the body axis and protrude partially into the cavity enclosed by the supporting structure.

According to one preferred embodiment, the through openings in the supporting body or in the filter element are configured elongated in the axial direction, wherein the length of the lateral delimiting struts is preferably greater than the mutual spacing of the lateral delimiting struts. The length of the lateral delimiting struts or the mutual spacing of the vertices of the end-face delimiting struts is herein preferably greater by a factor of 1.5 to 3 than the mutual spacing of the lateral delimiting struts.

According to one embodiment, the stiffening ribs can extend continuously over the axial length of the supporting structure into the region of the end pieces. In an alternative, in particular preferred embodiment, although the stiffening ribs extend over the axial length of the supporting structure, they end at a distance from the end pieces in the region of the supporting structure having the through openings. This embodiment creates considerable advantages, above all in production engineering terms, because the end pieces can be clamped in place substantially more easily and more uniformly for further machining steps, without clamping mandrels having to have recesses for the stiffening ribs, to which, moreover, the supporting bodies must be precisely aligned.

The stiffening ribs are a constituent part of longitudinal struts running parallel to the body axis, which divide, preferably bisect, certain of the through openings between the associated lateral delimiting struts, and at the same time, for individual other through openings, form one of the two lateral delimiting struts. If two stiffening ribs are present, through these measures certain of the through openings are bisected and reduced to quadrangular, slot-like through openings; in particular, it is herein advantageous if the longitudinal struts in part, at the same time, also form the lateral delimiting struts for other through openings which lie axially offset. In particular if the stiffening ribs partially coincide with the mutually aligned lateral delimiting struts of the respectively axially offset next-but-one through opening, the supporting body acquires a high effective passage area despite the longitudinal struts and stiffening ribs which are present.

In order to achieve a favourable flow ratio at the supporting body, it is in particular advantageous if the longitudinal struts have on the surface partially flat side flanks, which run obliquely to a plane intersecting the body axis. The angle of the side flanks of the longitudinal struts one to another can lie in particular between 3° and 8°, particularly advantageously around 5° ± 1°.

A particularly flexurally rigid supporting body is formed if the supporting body is provided with four stiffening ribs, which are arranged respectively offset by 90° from one another. Further preferably, the supporting body can then correspondingly acquire four longitudinal struts running parallel to the body axis. For the flow ratios and for the enlargement of the effective filter area, it is further advantageous if the individual supporting struts taper from the inner side to the outer side of the supporting structure, wherein preferably the supporting struts, in the majority of the through openings, delimit an aperture area which on the outer side is greater by a factor of 1.3 to 3.5, in particular by a factor of 1.5 to 2.0, than on the inner side. In a preferred embodiment, the supporting struts also acquire on the surface partially flat side flanks, which run obliquely to a plane intersecting the body axis, wherein preferably the angle of the side flanks lies between 15° and 25°, and lies in particular around 19° ± 1°. Expediently, the side flanks, at the transition to the outer side of the supporting structure, are then provided with bevels or transition radii. The end-face delimiting struts can in particular run at an angle between 110° and 130° to one another.

The supporting body is in particular produced as a casting and/or it is provided at both ends with end pieces which are open at the end face and between which the supporting structure integrally extends. According to an in particular advantageous embodiment, each end piece can respectively be provided with at least one axial groove extending from the respective end face of the associated end piece, preferably with two axial grooves arranged mutually offset by 180°. Via appropriate axial grooves, a clamping of the filter material over the supporting body is particularly advantageously able to be effected. The end-face end region of each axial groove can be provided with an incision, and/or each end piece can be provided with a peripheral groove into which preferably each axial groove opens.

The stiffening struts can have on the inner face exposed in the cavity a curved, preferably an arcuately curved surface, in particular a surface curved in a circular arc shape. The stiffening struts can rise, in relation to the inner face exposed in the cavity, preferably by maximally 1.5 mm, particularly preferably by less than 1.1 mm, over the inner side of the supporting structure, so that, in the axial direction, a sufficient free flow cross-section remains and, at the same time, a sufficient increase in the rigidity of the supporting body, in particular against bending, is achieved.

Those embodiments of the stiffening strut which have been described further above are in particular advantageous if the supporting body consists of plastics material, or if the supporting body is produced by metal printing process and consists of a metallic material suitable for this process. In order to avoid unwanted deposits on the supporting body, it is further advantageous if the surface of the supporting body on the inner face in the axial direction is configured smooth and free from elevations.

In a filter element produced with a corresponding supporting body, it is in particular advantageous if the end bushings are respectively provided with at least one peripheral groove for the reception of a sealing ring, in particular an O-ring. It is particularly expedient if the end bushings consist of separate bushing pieces anchored to, in particular formed onto, the end pieces. These bushing pieces can, for instance, be injection-moulded onto the end pieces after the supporting body has previously been produced as a one-piece injection-moulded part or metal-printed part with end pieces and supporting body with formed-on through openings, and the filter material has been mounted onto the supporting body. According to another advantageous embodiment, the individual bushing pieces can have an unsymmetrical outer periphery, so that they can be used only in a specific orientation as filter elements in filters having corresponding receptacles for the releasable anchorage of filter elements.

Further advantages and embodiments of a supporting body according to the invention and of a filter element produced with such a supporting body emerge from the following description of advantageous illustrative embodiments shown in the drawing. In the drawing:
- **Fig. 1**: shows a filter element according to the invention in side view, partially broken open;
- **Fig. 2**: shows the filter element from **Fig. 1** in longitudinal section;
- **Fig. 3**: shows a top view from above onto the filter element from **Fig. 1****;**
- **Fig. 4**: shows the supporting body for the filter element from **Fig. 1** in perspective view;
- **Fig. 5**: shows the supporting body for the filter element from **Fig. 1****,** partially in section;
- **Fig. 6**: shows a detailed view of the honeycomb structure of the supporting body;
- **Fig. 7**: shows a detailed view of the supporting body in the region of one of the end pieces in sectional view;
- **Fig. 8**: shows a horizontal section through the supporting body in the region of the through openings in enlarged representation; and
- **Fig. 9**: shows a detailed view of an end piece of the supporting body in side view.

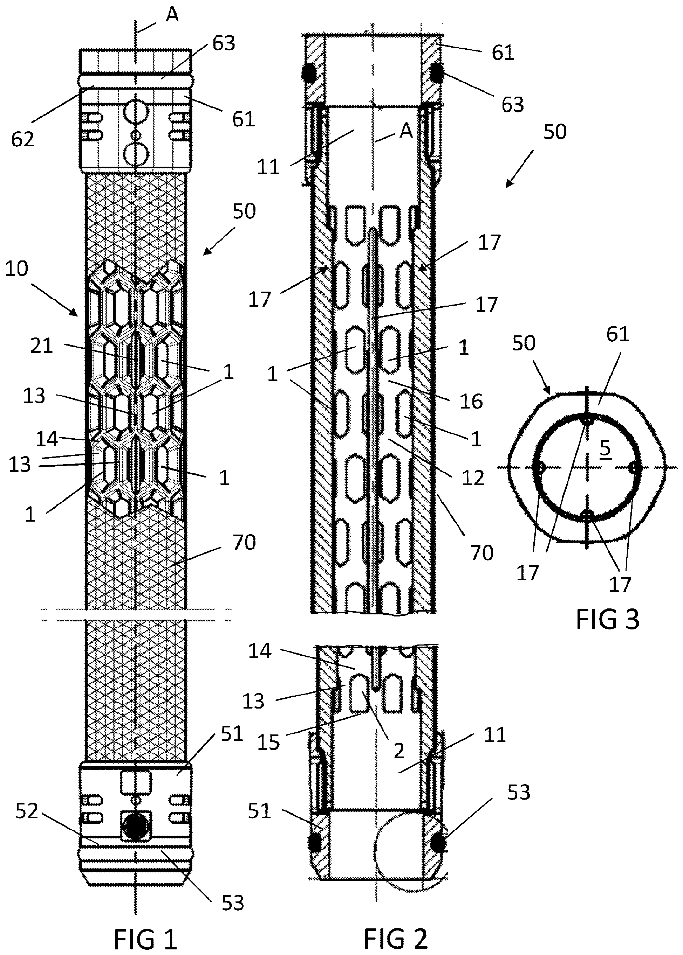

In Fig. 1, a filter element according to the invention for the filtering of fluids is denoted in its entirety by reference symbol 50. The filter element 50 has a lower end bushing 51 and an upper end bushing 61, between which a filter material 70, formed, for instance, by a single layer or multi layer filter fabric, extends over a relatively large length. At least one of the two end bushings 51,61 is open on the end face; in the shown illustrative embodiment, both end bushings 51,61 are open on the end face. The filter material 70 is supported against the outer periphery of a supporting body 10, which, over the full length of the filter element 50, delimits a cylindrical cavity, into which, distributed over the axial length of the supporting body 10, a multiplicity of through openings 1 open. As can already clearly be seen from Fig. 1, a large part of the through openings 1 has a hexagonal honeycomb shape with the basic shape elongated in the axial direction. In the shown illustrative embodiment, eight honeycomb openings 1, which are arranged peripherally offset from one another, form a ring, and at the same time, offset in the axial direction, there is respectively found a further ring having a further eight through openings 1, which at the same time, however, lie peripherally offset from the through openings 1 in the below-situated or above-situated annular group. The individual filter elements 50 can have overall lengths of 20 cm, or 30 cm and more, and the number of annular groups of through openings 1, which annular groups lie in the peripheral direction, can likewise amount to eighteen or more, preferably thirty or more, but can also be lower and have less than twenty annular groups.

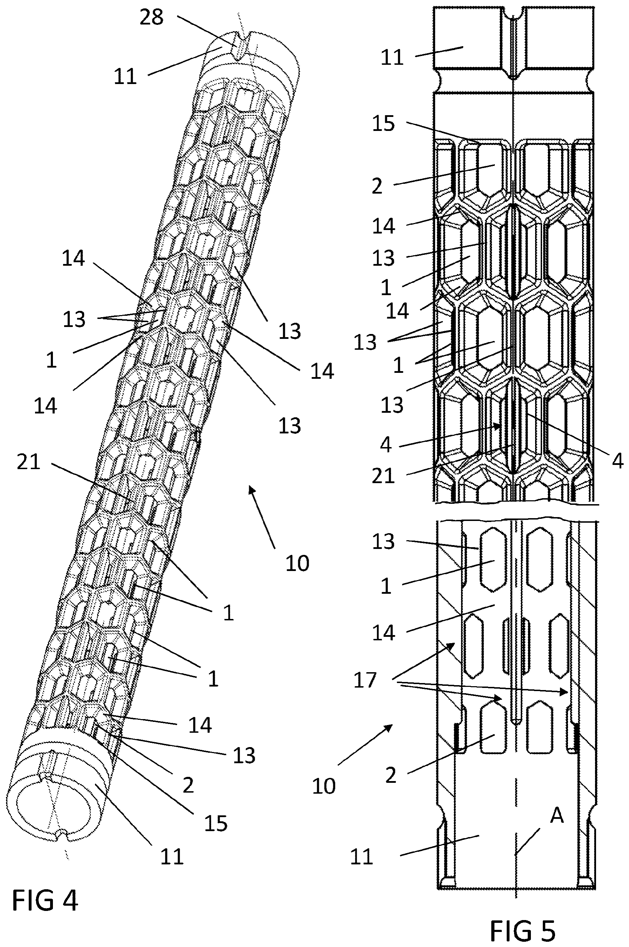

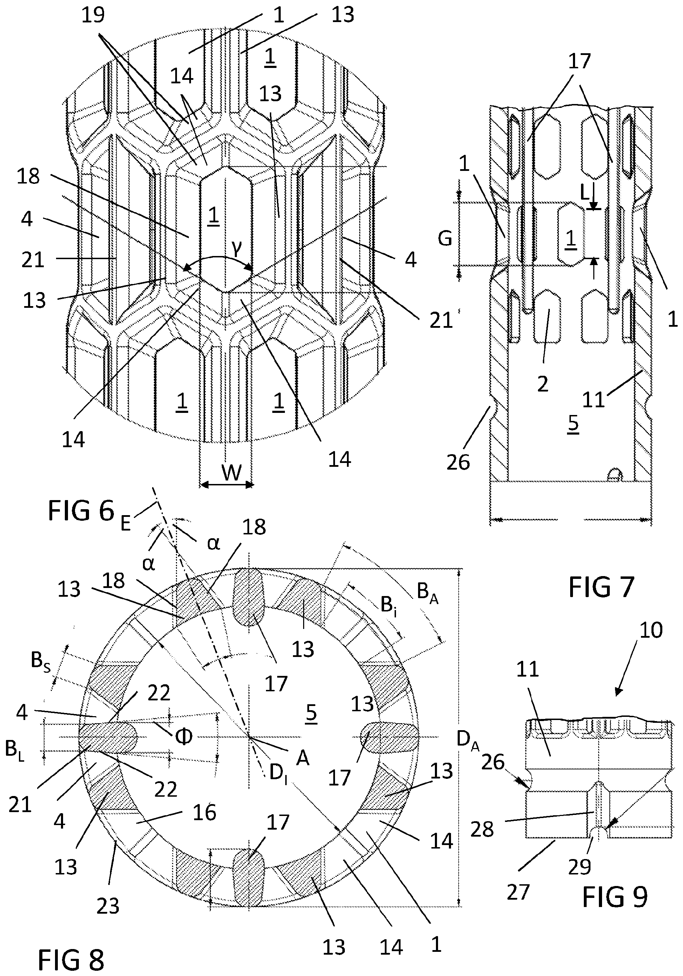

The axial and radial offset of the through openings 1 on the supporting body is particularly clearly evident also from the sectional view of the filter element 50 in Fig. 2, and from the view of the supporting body 10 in Fig. 4 to 8. The supporting body 10 of the filter element 50, which is preferably produced by injection-moulding process and consists of plastic, has at both ends end pieces 11 which are respectively open on the end face, wherein in these end pieces no radial through openings are configured. In the portion located between the end pieces 11, on the other hand, the supporting body is passed through by the radial through openings 1 and accordingly forms there a supporting structure 12, through which a liquid to be filtered with a liquid filter can pass radially to the filter material clamped onto the outer periphery 23 of the supporting body. The by far greatest part of all through openings 1 forms or consists of hexagonal honeycomb openings, wherein each of these through openings 1 is laterally delimited by two mutually parallel delimiting struts 13, and is delimited on the end face respectively by two delimiting struts 14 which converge in a V-shape, wherein these delimiting struts 13,14 form the supporting struts of the supporting structure of the supporting body. All lateral delimiting struts 13 run parallel to the body axis A of the supporting body 10 or of the filter element 50, and, viewed in the axial direction, a lateral delimiting strut 13 merges into one of the two end-face delimiting struts 14 running obliquely hereto, wherein the two end-face delimiting struts, at the vertex or at the tip of each through opening 1, merge again into a lateral delimiting strut 13 of the next, axially offset annular group. This structure also produces the offset of the through openings 1 in the peripheral direction in relation to adjacent annular groups of through openings 1. Each hexagonally honeycombed through opening 1 has between the two tip vertices of the end-face delimiting struts 14 an overall length denoted by G; the lateral delimiting struts 13 in turn have an axial length denoted by L, before merging into the end-face delimiting struts 14. The axial length L of the lateral delimiting struts 13 changes over the depth of the supporting body 10 only slightly, despite the radial taper of the individual lateral delimiting struts 13 and end-face delimiting struts 14 from the inner periphery 16 through to the outer periphery 23 of the supporting body 10. The mutual spacing W of the lateral delimiting struts 13 rises from the inner side 16 of the supporting body to the outer side 23 of the supporting body, as indicated in **Fig. 8** with the different arc lengths B_{I} on the inner periphery 16 and B_{A} on the outer periphery 23 of the supporting body 10.

The end-face delimiting struts 14 form quasi zigzagging rings transversely to the axial extent of the supporting body 10, and the lateral delimiting struts 13 connect the rings one to another or to the end pieces 11. The through openings 2 lying directly adjacent to the end pieces 11 have in the shown illustrative embodiment no hexagonal honeycomb shape, but rather a pentagonal window shape, since respectively the front edge 15 of these through openings 2 that adjoins the end pieces 11 runs straight and runs orthogonally to the body axis A.

On the inner side 16 of the supporting structure formed by the supporting struts 13, 14, between both end pieces 11 of the supporting body 10, are configured, in the shown illustrative embodiment, a total of four stiffening ribs 17, as can be clearly seen, in particular, in **Fig.** 3, 5, 7 and 8, protrude partially into the cavity 5 spanned by means of the supporting struts 13, 14 of the supporting body 10.

The concrete structure of the supporting body 10 is in particular apparent from **Fig.** 4 to 8, to which reference is now additionally made. **Fig.** 4 shows by way of example a supporting body 10 for a filter element according to the invention having a structural length of about 20 cm, which supporting body has sixteen rows or annular groups, arranged axially offset from one another, of hexagonal honeycombed through openings 1, and also respectively has at the transition to the respective end piece 11 a row of pentagonal through openings 2. The, in total, eighteen rows, arranged offset from one another, of through openings 1 or through openings 2 at the transition to the respective end piece 11 offer an effective outer filter area which constitutes about 70 % of the total surface area of the filter element. The large part of the through openings 1 has respectively the hexagonal honeycomb shape having lateral, mutually parallel delimiting struts 13 and having end-face delimiting struts 14 which converge in a V-shape. Each hexagonal through opening 1 is herein configured clearly elongated in the axial direction, wherein each through opening 1 has an overall length or gap G between the tips of the V-shaped delimiting struts 14, and a width W which corresponds to the mutual spacing (distance) between the two lateral, axis-parallel delimiting struts 13. All the figures herein make clear that the individual delimiting struts 13, 14 taper from the inner side 16 to the outer side 23 of the supporting structure or supporting body 10, for which reason the surfaces of the delimiting struts 13 have on the bearing surface for the filter material a markedly greater mutual spacing (distance apart) than on the inner side 16 of the supporting body, hence at the transition of the shaping material of the supporting body 10 to the cavity 5. The through openings 1 of hexagonal honeycomb shape hereby acquire an aperture area which on the outer side 23 of the supporting body, hence in that region where the filter material bears against the supporting body 10, in dependence on the radial thickness of the individual supporting struts 13, 14, is approximately twice as large as on the inner side 16. The surfaces 18 of the individual lateral delimiting struts 13 and the surfaces 19 of the end-face delimiting struts 14 are preferably partially flat, and the angle α between a plane E, which centrally intersects the body axis A and the longitudinal struts 13, and the respective surface 18 of the delimiting struts 13 measures about 19°. The same draft angle is also exhibited by the end-face delimiting struts 14 in relation to a plane which divides such an end-face delimiting strut 14 between through openings 1 of neighbouring annular groups. From the detailed view in Fig. 6 and the sectional view in Figure 8, it becomes particularly clear how the individual delimiting struts 13, 14 taper upwards, and it is also clearly apparent that each delimiting strut 13 demarcates through openings 1 which lie side by side, thus peripherally offset from one another. The end-face delimiting struts 14, which converge in a V-shape, in turn demarcate through openings 1 lying axially adjacent to one another, whereby the high packing density of the through openings 1 arranged distributed over the length is obtained. The angle γ of the two end-face delimiting struts 14, which converge in a V-shape, measures in the shown illustrative embodiment approximately 120°, wherein this angle remains approximately constant over the whole of the depth of the delimiting struts 14.

In the represented, preferred illustrative embodiment, the stiffening ribs 17 projecting inwards over the inner side 16 of the supporting body 10 do not extend as far as the end pieces 11, but rather they end at a distance therefrom at about halfway along the through openings 2 of pentagonal shape, as is clearly shown, in particular, by **Fig.** 2, 5 and 7. As a result, the end pieces 11 of the supporting body 10 contain a circular, smooth inner surface, thereby facilitating the engagement of clamping mandrels in the end pieces 11 for the fitting of the filter material and, in particular, for the application of the end bushings 51,61, The stiffening ribs 17 are at the same time, in the preferred illustrative embodiment, a constituent part of longitudinal struts 21 which run parallel to the body axis A and extend over the whole of the depth of the supporting structure, i.e. extending from the outer side 23 of the supporting body 10, against which the filter material bears, up to the inner side 16. The stiffening ribs 17 or the longitudinal struts 21 are arranged such that they partially coincide with the lateral delimiting struts 13, or jointly form these same. In every second annular group of through openings 1, respectively half of all 8 through openings 1 are divided by means of the four longitudinal struts 21 by a segment of the longitudinal strut 21, so that every second annular group has reduced through openings 4 of quadrangular, non-uniform cross section. The stiffening ribs 17 have on the inner face exposed in the cavity 5 an arcuately curved surface, and protrude by less than 1.1 mm over the inner side 16 of the supporting structure of the supporting body 10 into the cavity 5, if, as in the shown illustrative embodiment, the supporting body 10, for instance, has an external diameter D_{A} of approximately 16.5 mm and an internal diameter D_{I} of approximately 13 mm. The thicknesses can change, however, with other cavity cross sections, in particular in the case of larger filter elements.

Similarly to the lateral delimiting struts 13, also the longitudinal struts 21 taper from the inner side 16 of the supporting body to its outer side 23. In the shown illustrative embodiment, the longitudinal struts 21 are designed such that their width B_{L} on the outer side 23 of the supporting body 10 approximately corresponds to the width B_{S} of the lateral supporting struts 13. The side flanks 22 of the longitudinal struts 21 run, similarly to the surfaces 18 of the supporting struts 13, obliquely to a plane intersecting the body axis A, though the draft angle Φ is substantially smaller than in the lateral delimiting struts 13 and measures only about 5°. At all transitions of the flattened or flat surfaces 18, 19 of the delimiting struts 13,14 and longitudinal struts 21, oblique or preferably rounded bevels are formed in order to avoid any risk of damage to the filter material.

As already set out in the introduction, the supporting body 10 forms with the supporting structure configured integrally between the two end pieces 11 the main body of a filter element 50, as represented in Fig. 1 and 2. For this purpose, the filter medium 70 is mounted onto the supporting body 10. Following mounting of the filter material 70, the two end bushings 51, 61 are fitted, or preferably injection moulded from other plastic than the supporting body 10. As a result, relative freedom is afforded in the shaping of the end bushings 51, 61, and at least one of the two end bushings 51 or 61 can acquire an unsymmetrical outer periphery which permits the fitting of the filter elements solely in a specific relative position of the filter element 50 relative to the receiving fixture in the filter element. Through injection moulding of the end bushings 51, 61 following prior mounting of the filter material 70, it can particularly easily be achieved that leak-tightness is ensured at the filter elements 50, so that fluid can pass into the cavity solely via the end-face openings in the end pieces 11 of the supporting body and pass out of the filter elements 50 as filtrate via the through openings in the supporting body 10 and the filter material 70 mounted upstream of these, without leakage flows being able to arise between the end bushings 51, 61 and the filter material 70.

The two end bushings 51, 61 in turn are respectively provided with peripheral grooves 52 or 62, into which an O-ring 53 or 63 is inserted in order to ensure the leak-tightness of the filter candles in corresponding filters. In the preferred embodiment, the supporting body 10 also has in the region of both end pieces 11 respectively a peripheral groove 26, which is positioned at a distance from the end face 27 of the end piece 11, and into the peripheral groove 26 there respectively opens at least one axial groove 28 extending out from the end face 27. The peripheral groove 26 has a rounded bottom; the axial groove 28 has on the end face an indent 29, preferably an indent in the shape of a circular arc. In the shown illustrative embodiment, each end piece 11 has two axial grooves 28, which are configured mutually offset by 180° on the outer periphery of the end pieces 11. The fitted end bushings 51, 61 engage in the axial grooves 28.

For the person skilled in the art, numerous modifications which shall fall within the scope of the appended claims will emerge from the previous description. The number, length, width of the through openings and the draft angle of the surfaces of the delimiting struts can vary. The stiffening ribs, which run protrudingly over the inner side of the supporting body, can have a lesser width at the transition to the inner side than the longitudinal struts, so that a step is hence formed there between stiffening rib on the one hand, and longitudinal strut on the other hand, in any event in those regions in which the longitudinal strut bisects one of the through openings. Also the number of stiffening ribs can vary, even if the preferred embodiment provides four stiffening ribs. The filter medium could consist of a single layer or fabric, but could consist of several layers, like especially 3 layers.

## Claims

1. Supporting body for filter elements, in particular filter candles for reversible flow filters, comprising two end pieces (11) and a supporting structure connecting the end pieces (11) one to another and delimiting a cavity (5) extending axially along a body axis (A), the said supporting structure having supporting struts which delimit through openings into the cavity (5), wherein both end pieces (11) are open on the end face and wherein, offset in the axial direction and offset in the peripheral direction, a plurality of through openings (1) are respectively configured around the cavity (5), wherein a majority of the through openings (1) are configured as hexagonal honeycomb openings having supporting struts, running parallel to the body axis, as lateral delimiting struts (13), and having supporting struts, converging in a V-shape, as end-face delimiting struts (14), **characterized in that** on an inner side (16) of the supporting structure are configured at least two stiffening ribs (17), which extend parallel to the body axis (A) and protrude partially into the cavity (5) enclosed by the supporting structure, wherein the stiffening ribs (17) are a constituent part of longitudinal struts (21) running parallel to the body axis, and wherein the stiffening ribs (17) together with the longitudinal struts (21) divide individual through openings (1), and form one of the two lateral delimiting struts (13) of other through openings (1).

2. Filter element for filters, in particular reversible flow filters, for the filtering of fluids, comprising two end bushings (51; 61), of which at least one is open on the end face, comprising a supporting body (10) formed by means of a plurality of supporting struts and having through openings for throughflow of a fluid, and comprising a filter material (70) which surrounds the supporting body (10) and is supported against the latter, wherein the supporting body (10) has two end pieces (11) and a supporting structure connecting the end pieces one to another and delimiting a cavity (5) extending axially along a body axis (A), the said supporting structure having supporting struts which delimit through openings into the cavity (5), wherein, offset in the axial direction and offset in the peripheral direction, a plurality of through openings (1) are respectively configured around the cavity,
**characterized in that** the supporting body is configured according to claim 1.

3. Supporting body according to Claim 1 or filter element according to Claim 2, **characterized in that** the supporting body is produced as a casting, and/or **in that** the through openings (1) are configured elongated in the axial direction, wherein the length of the lateral delimiting struts (13) and/or the gap (G) of the vertices of the end-face delimiting struts (14) is preferably greater than the mutual spacing (W) of the lateral delimiting struts, and is preferably greater by a factor of 1.5 to 3 than the mutual spacing of the lateral delimiting struts (13).

4. Supporting body or filter element according to one of the preceding claims, **characterized in that** the stiffening ribs extend continuously over the axial length of the supporting structure into the region of the end pieces, or **in that** the stiffening ribs (17) extend over the axial length of the supporting structure, but end at a distance from the end pieces (11) in the region of the supporting structure having the through openings (1; 2).

5. Supporting body or filter element according to one of the preceding claims, **characterized in that** the stiffening ribs (17) bisect the through openings (4) divided by the stiffening ribs (17) together with the longitudinal struts (21).

6. Supporting body or filter element according to one of the preceding claims, **characterized in that** the longitudinal struts (21) have on the surface partially flat side flanks (22), which run obliquely to a plane intersecting the body axis, wherein preferably the angle (Φ) of the side flanks (22) lies between 3° and 8°, and in particular lies around 5° ± -1°.

7. Supporting body or filter element according to one of the preceding claims, **characterized in that** the supporting body (10) has four stiffening ribs (17) which are arranged respectively offset by 90° from one another.

8. Supporting body or filter element according to one of the preceding claims, **characterized in that** the individual delimiting struts (13; 14) taper from the inner side (16) to the outer side (23) of the supporting structure, wherein preferably the delimiting struts (13; 14), in the majority of the through openings (1), delimit an aperture area which on the outer side (23) is larger by a factor of 1.5 to 3, in particular a factor of 1.5-2.0, than on the inner side (16) of the supporting body (10).

9. Supporting body or filter element according to Claim 7,
**characterized in that** the delimiting struts (13; 14) have on the surface partially flat side flanks (18; 19), which run obliquely to a plane (E) intersecting the body axis, wherein preferably the angle of the side flanks (18; 19) lies between 15° and 25°, and lies in particular around 19° ± 1°.

10. Supporting body or filter element according to Claim 8,
**characterized in that** the side flanks (18; 19), at the transition to the outer side of the supporting structure, are provided with bevels or transition radii.

11. Supporting body or filter element according to one of the preceding claims, **characterized in that** the end-face delimiting struts (14) run at an angle (γ) of between 110° and 130° to one another.

12. Supporting body or filter element according to one of the preceding claims, **characterized in that** the supporting body (10) is provided at both ends with end pieces (11) which are open at the end face and between which the supporting structure integrally extends, wherein each end piece (11) respectively has at least one axial groove (28) extending from the respective end face (27) of the associated end piece (11), wherein, further preferably, the end-face end region of the axial groove is provided with an indent (29), and/or each end piece is provided with a peripheral groove (26) into which preferably each axial groove (28) opens.

13. Supporting body or filter element according to one of the preceding claims, **characterized in that** the stiffening ribs (17) have, on the inner face exposed in the cavity (5), a curved, preferably an arcuately curved surface, in particular a surface curved in a circular arc shape, and/or **in that** the stiffening ribs (17) rise, on the inner face exposed in the cavity (5), by maximally 1.5 mm, preferably less than 1.1 mm, over the inner side (16) of the supporting structure.

14. Supporting body or filter element according to one of the preceding claims, **characterized in that** the supporting body (10) consists of plastics material, or **in that** the supporting body consists of a metallic material suitable for 3D metal printing process, and/or **in that** the surface of the supporting body on the inner face in the axial direction is configured smooth and free from elevations.

15. Filter element according to one of the claims 2 to 14,
**characterized in that** the end bushings (51; 61) are respectively provided with at least one peripheral groove (52; 62) for the reception of a sealing ring, in particular an O-ring (53; 63), wherein preferably the end bushings consist of separate bushing pieces anchored to or formed onto the end pieces, and particularly preferably of bushing pieces with unsymmetrical outer periphery.

## Patentansprüche

1. Stützkörper für Filterelemente, insbesondere Filterkerzen für Rückspülfilter, mit zwei Endstücken (11) und einer die Endstücke (11) miteinander verbindenden, einen entlang einer Körperachse (A) sich axial erstreckenden Hohlraum (5) begrenzenden Stützstruktur, welche Stützstruktur Stützstreben aufweist, die Durchgangsöffnungen in den Hohlraum (5) hinein begrenzen, wobei beide Endstücke (11) stirnseitig offen sind, und wobei in axialer Richtung versetzt und in Umfangsrichtung versetzt um den Hohlraum (5) herum jeweils mehrere Durchgangsöffnungen (1) ausgebildet sind, wobei ein Großteil der Durchgangsöffnungen (1) als sechseckige Wabenöffnungen mit parallel zur Körperachse verlaufenden Stützstreben als seitliche Begrenzungsstreben (13) und mit v-förmig zusammenlaufenden Stützstreben als stirnseitige Begrenzungsstreben (14) ausgebildet sind, **dadurch gekennzeichnet, dass** an einer Innenseite (16) der Stützstruktur wenigstens zwei Versteifungsrippen (17) ausgebildet sind, die sich parallel zur Körperachse (A) erstrecken und partiell in den von der Stützstruktur umspannten Hohlraum (5) hineinragen, wobei die Versteifungsrippen (17) Bestandteil von parallel zur Körperachse verlaufenden Längsstreben (21) sind, und wobei die Versteifungsrippen (17) zusammen mit den Längsstreben (21) einzelne der Durchgangsöffnungen (4) teilen, und für andere Durchgangsöffnungen (1) eine der beiden seitlichen Begrenzungsstreben (13) bilden.

2. Filterelement für Filter, insbesondere Rückspülfilter, zum Filtern von Fluiden, mit zwei Endbuchsen (51; 61), von denen wenigstens eine stirnseitig offen ist, mit einem mittels mehrerer Stützstreben gebildeten und Durchgangsöffnungen für einen Fluiddurchfluss aufweisenden Stützkörper (10) und mit einem den Stützkörper (10) umgebenden und an diesem abgestützten Filtermaterial (70), wobei der Stützkörper (10) zwei Endstücke (11) und eine die Endstücke miteinander verbindende, einen entlang einer Körperachse (A) sich axial erstreckenden Hohlraum (5) begrenzende Stützstruktur mit Stützstreben aufweist, die Durchgangsöffnungen in den Hohlraum (5) hinein begrenzen, wobei in axialer Richtung versetzt und in Umfangsrichtung versetzt um den Hohlraum herum jeweils mehrere Durchgangsöffnungen (1) ausgebildet sind, **dadurch gekennzeichnet, dass** der Stützkörper gemäß Anspruch 1 ausgebildet ist.

3. Stützkörper nach Anspruch 1 oder Filterelement nach Anspruch 2, **dadurch gekennzeichnet, dass** der Stützkörper als Gussteil hergestellt ist, und/oder dass die Durchgangsöffnungen (1) in axialer Richtung gestreckt ausgebildet sind, wobei vorzugsweise die Länge der seitlichen Begrenzungsstreben (13) und/oder der Abstand (G) der Scheitelpunkte der stirnseitigen Begrenzungsstreben (14) voneinander größer ist als der Abstand (W) der seitlichen Begrenzungsstreben, und vorzugsweise um den Faktor 1,5 bis 3 größer ist als der Abstand der seitlichen Begrenzungsstreben (13).

4. Stützkörper oder Filterelement nach einem der vorhergehenden Ansprüche, **dadurch gekennzeichnet, dass** die Versteifungsrippen sich durchgehend über die axiale Länge der Stützstruktur bis in den Bereich der Endstücke hinein erstrecken, oder dass die Versteifungsrippen (17) sich über die axiale Länge der Stützstruktur erstrecken aber beabstandet von den Endstücken (11) im Bereich der die Durchgangsöffnungen (1; 2) aufweisenden Stützstruktur enden.

5. Stützkörper oder Filterelement nach einem der vorhergehenden Ansprüche, **dadurch gekennzeichnet, dass** die Versteifungsrippen (17) die von den Versteifungsrippen (17) und Längsstreben (21) geteilten Durchgangsöffnungen (4) halbieren.

6. Stützkörper oder Filterelement nach einem der vorhergehenden Ansprüche, **dadurch gekennzeichnet, dass** die Längsstreben (21) an der Oberfläche partiell plane Seitenflanken (22) aufweisen, die schräg zu einer die Körperachse schneidenden Ebene verlaufen, wobei vorzugsweise der Winkel (Φ) der Seitenflanken (22) zwischen 3° und 8° liegt, und insbesondere bei 5° ± -1° liegt.

7. Stützkörper oder Filterelement nach einem der vorhergehenden Ansprüche, **dadurch gekennzeichnet, dass** der Stützkörper (10) vier jeweils um 90° versetzt zueinander angeordnete Versteifungsrippen (17) aufweist.

8. Stützkörper oder Filterelement nach einem der vorhergehenden Ansprüche, **dadurch gekennzeichnet, dass** die einzelnen Begrenzungsstreben (13; 14) sich von der Innenseite (16) zur Außenseite (23) der Stützstruktur verjüngen, wobei vorzugsweise die Begrenzungsstreben (13; 14) bei dem Großteil der Durchgangsöffnungen (1) eine Öffnungsfläche begrenzen, die an der Außenseite (23) um den Faktor 1,5 bis 3, insbesondere den Faktor 1,5-2,0, größer ist als an der Innenseite (16) des Stützkörpers (10).

9. Stützkörper oder Filterelement nach Anspruch 7, **dadurch gekennzeichnet, dass** die Begrenzungsstreben (13; 14) an der Oberfläche partiell plane Seitenflanken (18; 19) aufweisen, die schräg zu einer die Körperachse schneidenden Ebene (E) verlaufen, wobei vorzugsweise der Winkel der Seitenflanken (18; 19) zwischen 15° und 25° liegt, und insbesondere bei 19° ± 1° liegt.

10. Stützkörper oder Filterelement nach Anspruch 8, **dadurch gekennzeichnet, dass** die Seitenflanken (18; 19) am Übergang zur Außenseite der Stützstruktur mit Phasen oder Übergangsradien versehen sind.

11. Stützkörper oder Filterelement nach einem der vorhergehenden Ansprüche, **dadurch gekennzeichnet, dass** die stirnseitigen Begrenzungsstreben (14) in einem Winkel (γ) zwischen 110° bis 130° zueinander verlaufen

12. Stützkörper oder Filterelement nach einem der vorhergehenden Ansprüche, **dadurch gekennzeichnet, dass** der Stützkörper (10) an beiden Enden mit an der Stirnseite offenen Endstücken (11) versehen ist, zwischen denen sich die Stützstruktur integral erstreckt, wobei jedes Endstück (11) jeweils wenigstens eine von der jeweiligen Stirnseite (27) des zugehörigen Endstücks (11) ausgehende Axialnut (28) aufweist, wobei weiter vorzugsweise der stirnseitige Endbereich der Axialnut mit einer Einkerbung (29) versehen ist und/oder jedes Endstück mit einer Umfangsnut (26) versehen ist, in welche vorzugsweise jede Axialnut (28) mündet.

13. Stützkörper oder Filterelement nach einem der vorgehenden Ansprüche, **dadurch gekennzeichnet, dass** die Versteifungsrippen (17) an der im Hohlraum (5) freiliegenden Innenfläche eine gewölbte, vorzugsweise eine bogenförmig gewölbte, insbesondere eine kreisbogenförmig gewölbte Oberfläche aufweisen, und/oder dass sich die Versteifungsrippen (17) an der im Hohlraum (5) freiliegenden Innenfläche um maximal 1,5 mm, vorzugsweise weniger als 1,1 mm über die Innenseite (16) der Stützstruktur erheben.

14. Stützkörper oder Filterelement nach einem der vorgehenden Ansprüche, **dadurch gekennzeichnet, dass** der Stützkörper (10) aus Kunststoffmaterial besteht, oder dass der Stützkörper aus einem für ein 3D-Metalldruckverfahren geeigneten metallischen Werkstoff besteht, und/oder dass die Oberfläche des Stützkörpers an der Innenfläche in Axialrichtung glatt und erhebungsfrei ausgebildet ist.

15. Filterelement nach einem der Ansprüche 2 bis 14, **dadurch gekennzeichnet, dass** die Endbuchsen (51; 61) jeweils mit wenigstens einer Umfangsnut (52; 62) zur Aufnahme eines Dichtrings, insbesondere O-Rings (53; 63), versehen sind, wobei vorzugsweise die Endbuchsen aus separaten, an den Endstücken verankerten oder angeformten Buchsenstücken bestehen, und besonders vorzugsweise aus Buchsenstücken mit unsymmetrischem Außenumfang bestehen.

## Revendications

1. Corps de support pour éléments filtrants, en particulier bougies filtrantes pour filtres à écoulement réversible, comprenant deux pièces d'extrémité (11) et une structure de support reliant les pièces d'extrémité (11) l'une à l'autre et délimitant une cavité (5) s'étendant axialement le long d'un axe de corps (A), ladite structure de support présentant des entretoises de support qui délimitent des ouvertures traversantes dans la cavité (5), les deux pièces d'extrémité (11) étant ouvertes sur la face d'extrémité et, décalées dans la direction axiale et décalées dans la direction périphérique, une pluralité d'ouvertures traversantes (1) étant respectivement ménagées autour de la cavité (5), une majorité des ouvertures traversantes (1) étant conçues comme des ouvertures hexagonales en nid d'abeilles ayant des entretoises de support, s'étendant parallèlement à l'axe de corps, comme entretoises de délimitation latérales (13), et ayant des entretoises de support, convergeant en V, comme entretoises de délimitation de face avant (14), **caractérisé en ce que** sur un côté intérieur (16) de la structure de support sont formées au moins deux nervures de raidissement (17), qui s'étendent parallèlement à l'axe de corps (A) et font partiellement saillie dans la cavité (5) entourée par la structure de support, les nervures de raidissement (17) constituant des entretoises longitudinales (21) s'étendant parallèlement à l'axe de corps, et les nervures de raidissement (17) conjointement avec les entretoises longitudinales (21) divisant des ouvertures traversantes (1) individuelles, et forment l'une des deux entretoises de délimitation latérales (13) d'autres ouvertures traversantes (1).

2. Élément filtrant pour filtres, en particulier filtres à écoulement réversible, pour la filtration de fluides, comprenant deux douilles d'extrémité (51 ; 61), dont au moins une est ouverte sur la face d'extrémité, comprenant un corps de support (10) formé au moyen d'une pluralité d'entretoises de support et présentant des ouvertures traversantes pour le passage d'un fluide, et comprenant un matériau filtrant (70) qui entoure le corps de support (10) et est appuyé contre ce dernier, le corps de support (10) comportant deux pièces d'extrémité (11) et une structure de support reliant les pièces d'extrémité l'une à l'autre et délimitant une cavité (5) s'étendant axialement le long d'un axe de corps (A), ladite structure support présentant des entretoises de support qui délimitent des ouvertures traversantes dans la cavité (5), décalées dans la direction axiale et décalées dans la direction périphérique, une pluralité d'ouvertures traversantes (1) étant respectivement ménagées autour de la cavité, **caractérisé en ce que** le corps de support est conçu selon la revendication 1.

3. Corps de support selon la revendication 1 ou élément filtrant selon la revendication 2, **caractérisé en ce que** le corps de support est réalisé sous forme de pièce coulée et/ou **en ce que** les ouvertures traversantes (1) sont ménagées allongées dans la direction axiale, la longueur des entretoises de délimitation latérales (13) et/ou l'espace (G) des sommets des entretoises de délimitation de face avant (14) étant de préférence supérieure à la distance (W) mutuelle des entretoises de délimitation latérales, et étant de préférence supérieur d'un facteur 1,5 à 3 à l'espacement mutuel des entretoises de délimitation latérales (13).

4. Corps de support ou élément filtrant selon l'une quelconque des revendications précédentes, **caractérisé en ce que** les nervures de raidissement s'étendent en continu sur la longueur axiale de la structure de support jusque dans la zone des pièces d'extrémité, ou **en ce que** les nervures de raidissement (17) s'étendent sur la longueur axiale de la structure de support, mais se terminent à distance des pièces d'extrémité (11) dans la zone de la structure de support présentant les ouvertures traversantes (1 ; 2).

5. Corps de support ou élément filtrant selon l'une quelconque des revendications précédentes, **caractérisé en ce que** les nervures de raidissement (17) coupent en deux les ouvertures traversantes (4) divisées par les nervures de raidissement (17) conjointement avec les entretoises longitudinales (21).

6. Corps de support ou élément filtrant selon l'une quelconque des revendications précédentes, **caractérisé en ce que** les entretoises longitudinales (21) présentent sur leur surface des flancs latéraux (22) partiellement plats qui s'étendent obliquement par rapport à un plan coupant l'axe de corps, l'angle (Φ) des flancs latéraux (22) étant de préférence compris entre 3° et 8° et étant en particulier de l'ordre de 5° ± -1°.

7. Corps de support ou élément filtrant selon l'une quelconque des revendications précédentes, **caractérisé en ce que** le corps de support (10) présente quatre nervures de raidissement (17) qui sont disposées en étant respectivement décalées de 90° les unes par rapport aux autres.

8. Corps de support ou élément filtrant selon l'une quelconque des revendications précédentes, **caractérisé en ce que** les entretoises de délimitation individuelles (13 ; 14) se rétrécissent du côté intérieur (16) vers le côté extérieur (23) de la structure de support, les entretoises de délimitation (13 ; 14) délimitant de préférence, dans la majorité des ouvertures traversantes (1), une zone d'ouverture qui, sur le côté extérieur (23), est plus grande d'un facteur 1,5 à 3, en particulier d'un facteur 1,5 à 2,0, que sur le côté intérieur (16) du corps de support (10).

9. Corps de support ou élément filtrant selon la revendication 7, **caractérisé en ce que** les entretoises de délimitation (13 ; 14) présentent sur la surface des flancs latéraux (18 ; 19) partiellement plats qui s'étendent obliquement par rapport à un plan (E) coupant l'axe de corps, l'angle des flancs latéraux (18 ; 19) étant de préférence compris entre 15° et 25° et étant en particulier de l'ordre de 19° ± 1°.

10. Corps de support ou élément filtrant selon la revendication 8, **caractérisé en ce que** les flancs latéraux (18 ; 19) sont pourvus, au niveau de la transition vers le côté extérieur de la structure de support, de chanfreins ou de rayons de transition.

11. Corps de support ou élément filtrant selon l'une quelconque des revendications précédentes, **caractérisé en ce que** les entretoises de délimitation de face avant (14) forment un angle (γ) compris entre 110° et 130° l'une par rapport à l'autre.

12. Corps de support ou élément filtrant selon l'une quelconque des revendications précédentes, **caractérisé en ce que** le corps de support (10) est pourvu au niveau des deux extrémités de pièces d'extrémité (11) qui sont ouvertes au niveau de la face d'extrémité et entre lesquelles s'étend entièrement la structure de support, chaque pièce d'extrémité (11) présentant respectivement au moins une rainure axiale (28) s'étendant depuis la face avant (27) respective de la pièce d'extrémité (11) associée, de préférence encore, la zone d'extrémité de face d'extrémité de la rainure axiale présentant un renfoncement (29) et/ou chaque pièce d'extrémité étant pourvue d'une rainure périphérique (26) dans laquelle s'ouvre de préférence chaque rainure axiale (28).

13. Corps de support ou élément filtrant selon l'une quelconque des revendications précédentes, **caractérisé en ce que** les nervures de raidissement (17) présentent, sur la face intérieure exposée dans la cavité (5), une surface courbe, de préférence courbe arquée, en particulier une surface courbe en arc de cercle, et/ou **en ce que** les nervures de raidissement (17) s'élèvent, sur la face interne exposée dans la cavité (5), d'au maximum 1,5 mm, de préférence de moins de 1,1 mm, par rapport à la face interne (16) de la structure de support.

14. Corps de support ou élément filtrant selon l'une quelconque des revendications précédentes, **caractérisé en ce que** le corps de support (10) est en matière plastique, ou **en ce que** le corps de support est en un matériau métallique approprié pour le procédé d'impression de métal 3D et/ou **en ce que** la surface du corps de support sur la face intérieure dans la direction axiale est lisse et exempte de surélévations.

15. Élément filtrant selon l'une quelconque des revendications 2 à 14, **caractérisé en ce que** les douilles d'extrémité (51 ; 61) sont pourvues respectivement d'au moins une rainure périphérique (52 ; 62) pour la réception d'une bague d'étanchéité, en particulier d'un joint torique (53 ; 63), les douilles d'extrémité étant de préférence constituées de pièces de douille séparées ancrées ou formées sur les douilles d'extrémité, et en particulier de préférence de pièces de douille à périphérie extérieure asymétrique.
